# EUROPEAN PATENT SPECIFICATION

(11) **EP 0 919 422 B1**
(45) Date of publication and mention of the grant of the patent: **18.02.2004**
(21) Application number: 98122371.2
(22) Date of filing: 26.11.1998
(51) Int. Cl.: B60K 41/00, B60K 26/02, B62D 1/04

(54) **Combined propulsion unit and steering control for vehicles**
Kombinierte Antriebs- und Lenkungsvorrichtung eines Fahrzeugs
Appareil de commande de direction et du moteur pour un véhicule

(30) Priority: 26.11.1997 IT MO970218
(43) Date of publication of application: 02.06.1999
(73) Proprietor: Benassati, Giancarlo, 41042 Fiorano Modenese (MO) (IT)
(72) Inventor: Benassati, Giancarlo, 41042 Fiorano Modenese (MO) (IT)
(74) Representative: Crugnola, Pietro

(56) References cited:
- DE-A- 4 404 594
- US-A- 2 197 671
- US-A- 2 563 339
- US-A- 5 666 857

## Description

The invention concerns an apparatus for controlling the run of vehicles.

The state of art comprises running control systems comprising pedals actuating the brake, the accelerator and the clutch for speed shift (at least when the vehicle is not equipped with an automatic speed gear). A steering gear comprising a steering wheel rotatable around an axis allows the running direction of the vehicle to be controlled.

A first drawback of said speed control systems originates from the presence of the pedals: on one hand, the pedals may be a blunt element which is able to injure the lower limbs of the driver, in the event of an accident, on the other hand they can constitute an unsurmountable obstacle to the drive for disabled persons.

In addition, particularly in absence of an automatic speed gear, the pedals require that the lower limbs are coordinated with each other and with the upper limbs, which makes driving difficult, particularly for new licensed drivers or for people who are going to learn driving.

DE 4404594 discloses an operating device for steering a motor vehicle and making it accelerate or brake, by means of an apparatus comprising the features defined in the preamble of claim 1. The operating element can be adjusted by the driver of the vehicle. The operating device is further provided with at least one probe for each degree of freedom, said probe working with the operating element so as to give off a signal which depends on the position of the operating element. The signal is designed to enable the steering of the vehicle and the brake and/or engine control according to the position of the operating element.

It is an object of the present invention to eliminate the drawbacks mentioned above, particularly to make driving easier even for people who have not an optimum control and coordination of the lower limbs.

According to the present invention, there is provided an apparatus for controlling the run of a vehicle comprising the features contained in claim 1.

In such a way, the driver is required to use the upper limbs only in order to control the vehicle, if there is an automatic speed gear, which makes possible to drive the vehicle even for people having problems in using the lower limbs in a controlled manner, or people who are completely or partially deprived of the lower limbs.

In addition, new licensed drivers are notably facilitated, because driving is made considerably easier.

A further advantage of said apparatus results from the possibility of arranging an "Air Bag" in connection with the lower limbs, which increases the safety chances of the driver, in the event of an accident.

The invention will be better understood and carried into effect referring to the attached drawings, which illustrate embodiments of it and are intended purely as non-limiting examples.
Figure 1 is a partial and schematic perspective view of an apparatus according to the present invention.
Figure 2 is a front schematic view of a steering wheel of an apparatus according to the present invention.
Figure 3 is a partial, schematic and perspective view of a further version of an apparatus according to the invention.

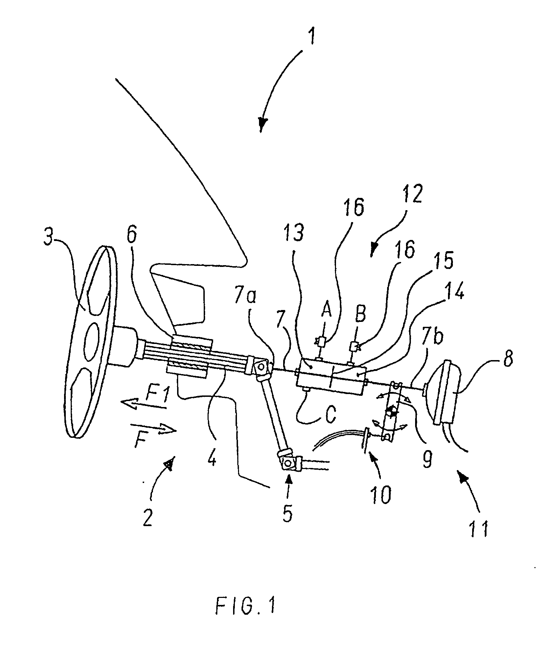

Referring to Figure 1, an apparatus 1 for controlling the run of a vehicle comprises steering means 2 provided with a steering wheel 3 which is rotatable around an axis defined by a steering column 4 coupled at a first end to the centre of the steering wheel 3. A rotation of the steering wheel 3 defines the running direction of the vehicle by means of shaft means 5 couple to a second end of the steering column 4. The steering column 4 is movable in an axial direction at the inside of a guide sleeve 6. When the steering column 4 is moved in the direction of the arrow F by means of the steering wheel 3, the second end of the steering column 4 interact, by means of a rod 7, with speed control means 11 comprising braking means 8 and accelerating means 10.

The rod 7 is coaxial and aligned with the steering column 4 and has a proximal end 7a, close to the steering means 2 and coupled to the steering column 4, and a distal end 7b remote from the steering means 2 and interacting directly with the braking means 8. Near to the distal end 7b, the rod 7 engage a first branch of a rocker arm 9, a second branch of which is coupled to rope shaped accelerating means 10. In such a way, there is a coordinated interaction between the steering means 2, on one hand, and the braking means 8 and the accelerating means 10, on the other hand: if the driver pushes the steering wheel 3 in the direction of the arrow F, the rod 7, pushed by the steering column 4, activates directly the braking means 8 and deactivates indirectly, through the rocker arm 9, the accelerating means 10: if, on the contrary, the driver of the vehicle draws the steering wheel 3 towards himself, in the direction of the arrow F1, the rod 7 moved in the same direction by the steering column 4 deactivates the braking means 8 and activates the accelerating means, through the rocker arm 9.

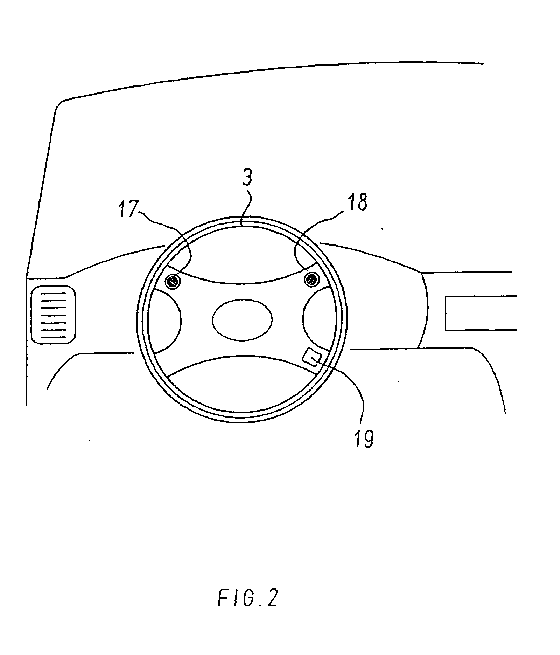

The axial movements of the steering column 4 are controlled by an actuator 12, preferably an hydraulic actuator, which regulates the stroke of the rod 7 and the axial thrust required to move the rod 7. The actuator 12 comprises a first chamber 13 and a second chamber 14 defined by a piston 15 coupled to the rod 7. The first chamber 13 and the second chamber 14 are fed by lines A, B, C, lines A and B, which leads to the first chamber 13 and to the second chamber 14, respectively, being provided with valves 16 having variable throats in order to change the inflow and outflow speed of oil in the chambers 13 and 14, respectively, during movements of the piston 15. The force which is required to move the rod 7 in an axial direction may be changed by enlarging or narrowing, respectively, the flow section defined by the valves 16. The valves 16 may be adjusted directly by the driver or by means of push-button operated drive means 17 and 18 (Figure 2) arranged on the spokes of the steering wheel 3. By operating further drive means 19, the line C is kept pressurised, said line feeding the chamber 13 causing the rod 7 to activate the braking means 8 and deactivate the accelerating means 10, the drive means 19 acting thus as a parking brake. Advantageously, the line C may be automatically pressurised, for instance by the same control means which activates the "Air Bag".

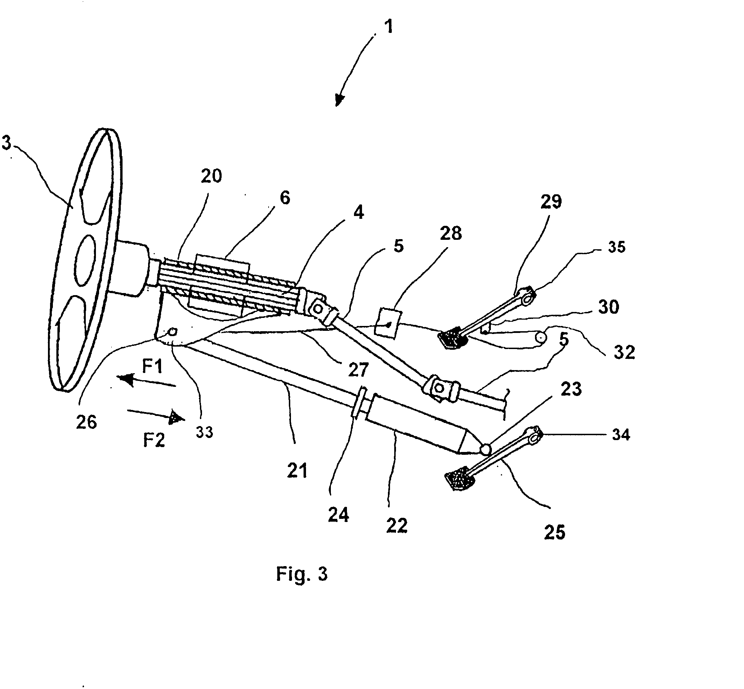

Figure 3 illustrates a further version of an apparatus according to the invention, in which the steering column 4 of the steering wheel 3 is coupled to a bushing 20 in such a way as to be able to freely rotate, but to be prevented from translating, with respect to the bushing. The bushing 20 is slidingly coupled to the inside of the guide sleeve 6.

The bushing 20 is equipped with an extension 33 to which an end of a tie rod 21 is fixed at 26, said tie rod being slidingly coupled to the inside of an hollow element 22, for instance a cylindrical element, provided with pushing means 23 at an end thereof, said pushing means operating the accelerating means 10 by pushing the accelerator pedal so that it rotates around the respective fulcrum. A stop element 24 is arranged on the tie rod 21 and is capable of limiting the penetration by sliding of the tie rod 21 into the cylinder 22.

A first end of rope means 27 is fixed to the extension 33, said rope means passing through a guide element 28 and a return element 32, for instance a pulley. A second end of the rope means 27 is fixed to the brake pedal 29 which actuates the braking means 8, for instance to a projection 30 at the lower portion of the pedal 29. If the steering wheel 3 is pushed in the direction of the arrow F2, the bushing 20 itself, with its extension 33, is pushed in the direction of the arrow F2. The tie rod 21, pushed by the extension 33, slides at the inside of the cylinder 22, thus penetrating into it, until the stop element 24 gets in contact with the cylinder 22. At this stage, if the steering wheel 3 is further pushed in the direction of the arrow F2, a thrust is applied to the cylinder 22 through the tie rod 21. Said thrust is transmitted to the accelerator pedal 25 by the pushing means 23 of the cylinder 22, so that the accelerating means 20 are operated. On the contrary, if a traction in the direction of the arrow F1 is applied to the steering wheel 3, the thrust of the pushing element 23 on the accelerator pedal 25 is reduced to zero progressively and, at the same time, the rope means 27 is tensioned, which causes a progressive rotation of the brake pedal 29 around its fulcrum 35, in such a way as to actuate the braking means 8. If the thrust on the steering wheel 3 is again reversed, i.e. if the steering wheel 3 is pushed in the direction of the arrow F2, the tension of the rope means 27 is reduced to zero, the brake pedal is no more operated and a thrust is again applied to the accelerator pedal 25, so that the accelerating means are again actuated. In such a way, the interaction between the steering means 2, on one hand, and the braking 8 and accelerating 10 means, on the other hand, is coordinated.

Of course, it is also possible to actuate the accelerator pedal by means of the rope means 27 and the brake pedal by means of the tie rod 21, the hollow element 22 and the thrust element 23. In this instance, it is necessary to apply a thrust to the steering wheel in the direction of the arrows F2, in order to operate the braking means, whilst it is necessary to apply a traction to the steering wheel in the direction of the arrow F1, in order to operate the accelerating means 10.

## Claims

1. Apparatus for controlling the run of a vehicle comprising steering means (2) and speed control means (11), said steering means comprising a steering wheel (3) rotatable around an axis defined by a steering column (4), said steering means (2) being movable along said axis to activate braking means in one direction and accelerating means in the other direction, **characterized in that**, said steering column (4) is mechanically connected to said braking and accelerating means, so as to be capable of mechanically actuating said braking means and said accelerating means.

2. Apparatus according to claim 1, wherein said steering column (4), when activating said braking means, deactivates at the same time said accelerating means, and vice versa.

3. Apparatus according to claim 1, or 2, wherein said steering column (4) is axially movable on axial guide means (6).

4. Apparatus according to any of claims 1 to 3, wherein said braking means (8), or said accelerating means (10), are activated, or deactivated, by said steering column (4) through rod means (7).

5. Apparatus according to claim 4, wherein said rod means are co-axial with, and coupled to, said steering column (4), said rod means acting directly on said braking means at an end thereof remote from said steering means (2) and interacting indirectly with said accelerating means (10) through a rocker arm (9) having a first branch engaged by said rod means (7) and a second branch coupled to said accelerating means (10).

6. Apparatus according to any of claims 3 to 5, wherein the axial stroke of said steering column (4) is controlled by an actuator (12), preferably a hydraulic actuator.

7. Apparatus according to claim 6, wherein said actuator (12) comprises a first chamber (13) and a second chamber (14) defined by a piston (15) coupled to sad rod means (7), said first chamber (13) and said second chamber (14) being fed by lines (A, B).

8. Apparatus according to claim 7, wherein said lines (A, B) are provided with valve means (16) having variable throats in order to change the inflow and outflow speed of oil in said first chamber (13) and said second chamber (14), respectively, during movements of the piston (15).

9. Apparatus according to claim 8, wherein said throats of said valve means (16) may be varied by remote drive means (17, 18).

10. Apparatus according to any of claims 7 to 9, and further comprising a further line (C) capable of keeping said first chamber (13) pressurised if actuated by further remote drive means (19).

11. Apparatus for controlling the run of a vehicle according to claim 10, wherein said further line (C) is advantageously pressurised, even automatically, by means of a device which activates an "Air Bag".

12. Apparatus according to claim 1, or 2, wherein said accelerating means (10), or said braking means (8), are activated by said steering column (4) through pushing means (21, 22, 23) connected to said steering column (4) and acting on respective pedal means (25; 29) operatively associated with said accelerating means (10), or braking means (8).

13. Apparatus according to claim 12, wherein said pushing means (21, 22, 23) comprises tie rod means (21) fixed at an end thereof to extension means (33) projecting from bushing means (20) to which said steering column (4) is internally coupled, said steering column (4) being coupled to said bushing means (20) in such a way as to be able to rotate freely, but unable to translate, with respect to it, said tie rod means (21) being able to apply a thrust to said respective pedal means (25; 29).

14. Apparatus according to claim 13, wherein said tie rod means (21) are slidable at the inside of an hollow element (22) provided, at one end, with a pushing element (23) capable of transmitting said thrust to said respective pedal means (25), said tie rod means (21) being provided with stop means (24) capable of limiting the penetration by sliding of the tie rod (21) into said hollow element (22).

15. Apparatus according to any of claims 12 to 14, wherein said braking means (8), or said accelerating means (10), are activated by rope means (27) having a first end connected to said steering column (4) and a second end connected to said respective pedal means (27, 29).

16. Apparatus according to claim 15, wherein said rope means (27) are connected to connecting means (30) provided at a lower portion of said respective pedal means (27, 29), guide means (28) and return means (32) for said rope means (27) being provided.

## Patentansprüche

1. Vorrichtung zum Kontrollieren des Laufes eines Fahrzeuges, mit einem Steuermittel (2) und einem Geschwindigkeitsregelmittel (11), wobei das Steuermittel ein Steuerrad (3) aufweist, das um eine Achse drehbar ist, die von einer Lenksäule (4) definiert wird, wobei das Steuermittel (2) entlang der Achse beweglich ist, um in einer Richtung ein Bremsmittel zu aktivieren und in der anderen Richtung ein Beschleunigungsmittel zu aktivieren, **dadurch gekennzeichnet, dass** die Lenksäule (4) mechanisch mit dem Bremsmittel und dem Beschleunigungsmittel verbunden ist, um so eine mechanische Betätigung des Bremsmittels und des Beschleunigungsmittels zu erlauben.

2. Vorrichtung nach Anspruch 1, bei der die Lenksäule (4), wenn das Bremsmittel aktiviert ist, zur selben Zeit das Beschleunigungsmittel deaktiviert und umgekehrt.

3. Vorrichtung nach Anspruch 1 oder 2, bei der die Lenksäule (4) an einem axialen Führungsmittel (6) axial beweglich ist.

4. Vorrichtung nach irgend einem der Ansprüche 1 bis 3, bei der das Bremsmittel (8) oder das Beschleunigungsmittel (10) über die Lenksäule (4) mittels eines Stabmittels (7) aktiviert oder deaktiviert werden.

5. Vorrichtung nach Anspruch 4, bei der das Stabmittel mit der Lenksäule (4) koaxial ist und damit gekoppelt ist, wobei das Stabmittel direkt auf das Bremsmittel an einem Ende desselben, das von dem Steuermittel (2) entfernt ist, wirkt und indirekt über eine Armschwinge (9), die einen ersten mit dem Stabmittel (7) zusammenwirkenden Teil und einen zweiten mit dem Beschleunigungsmittel (10) zusammenwirkenden Teil aufweist, mit dem Beschleunigungsmittel (10) zusammenwirkt.

6. Vorrichtung nach irgend einem der Ansprüche 3 bis 5, bei der der axiale Hub der Lenksäule (4) über einen Aktuator (12), vorzugsweise über einen hydraulischen Aktuator, kontrolliert wird.

7. Vorrichtung nach Anspruch 6, bei der der Aktuator (12) eine erste Kammer (13) und eine zweite Kammer (14) aufweist, definiert durch einen Kolben (15), der mit dem Stabmittel (7) gekoppelt ist, wobei die erste Kammer (13) und die zweite Kammer (14) über Leitungen (A, B) gespeist werden.

8. Vorrichtung nach Anspruch 7, bei der die Leitungen (A, B) mit Ventilmitteln (16) verbunden sind, die variable Drosseln besitzen, um die Zuflussgeschwindigkeit und die Abflussgeschwindigkeit von Öl in der ersten Kammer (13) bzw. der zweiten Kammer (14) während Bewegungen des Kolbens (15) zu verändern.

9. Vorrichtung nach Anspruch 8, bei der die Drosseln der Ventilmittel (16) über ferngesteuerte Antriebsmittel (17, 18) verändert werden können.

10. Vorrichtung nach irgend einem der Ansprüche 7 bis 9, die ferner eine weitere Leitung (C) aufweist, die die erste Kammer (13) unter Druck halten kann, wenn sie über ein weiteres ferngesteuertes Antriebsmittel (19) aktiviert wird.

11. Vorrichtung zum Kontrollieren des Laufs eines Fahrzeugs nach Anspruch 10, bei der die weitere Leitung (C) vorzugsweise unter Druck steht, sogar automatisch mit Hilfe einer Vorrichtung, die ein "Airbag" aktiviert.

12. Vorrichtung nach Anspruch 1 oder 2, bei der das Beschleunigungsmittel (10) oder das Bremsmittel (8) über die Lenksäule (4) über ein Druckmittel (21, 22, 23), das mit der Lenksäule (4) verbunden ist und auf entsprechende Pedalmittel (25; 29) wirkt, die arbeitsmäßig mit dem Beschleunigungsmittel (10) oder dem Bremsmittel (8) verbunden sind, aktiviert wird.

13. Vorrichtung nach Anspruch 12, bei der das Druckmittel (21, 22, 23) ein Verbindungsstangenmittel (21) aufweist, das an einem Ende derselben an einem Verlängerungsmittel (33) befestigt ist, das von einem Buchsenmittel (20), mit dem die Lenksäule (4) intern gekoppelt ist, hervorsteht, wobei die Lenksäule (4) mit dem Buchsenmittel (20) auf eine derartige Weise gekoppelt ist, dass sie frei drehbar ist, sich jedoch nicht in Bezug darauf verschieben kann, wobei das Verbindungsstangenmittel (21) in der Lage ist, einen Schub auf das betreffende Pedalmittel (25; 29) auszuüben.

14. Vorrichtung nach Anspruch 13, bei der das Verbindungsstangenmittel (21) auf der Innenseite eines hohlen Elementes (22) verschiebbar ist, das an einem Ende mit einem Druckmittel (23) versehen ist, das den Schub auf das betreffende Pedalmittel (25) übertragen kann, wobei das Verbindungsstangenmittel (21) mit einem Anschlagmittel (24) versehen ist, das in der Lage ist, das Eindringen durch Verschieben des Verbindungsstangenmittels (21) in das hohle Element (22) zu begrenzen.

15. Vorrichtung nach irgend einem der Ansprüche 12 bis 14, bei der das Bremsmittel (8) oder das Beschleunigungsmittel (10) durch ein Seilmittel (27) aktiviert wird, das ein erstes Ende aufweist, das mit der Lenksäule (4) verbunden ist, sowie ein zweites Ende, das mit dem betreffenden Pedalmittel (27, 29) verbunden ist.

16. Vorrichtung nach Anspruch 15, bei der die Seilmittel (27) mit Verbindungsmitteln (30) verbunden sind, die an einem unteren Ende des betreffenden Pedalmittels (27, 29) angebracht sind, wobei ein Führungsmittel (28) und ein Rückführmittel (32) für das Seilmittel (27) vorgesehen sind.

## Revendications

1. Dispositif de commande de la marche d'un véhicule, comprenant des moyens de direction (2) et des moyens (11) de contrôle de la vitesse, lesdits moyens de direction comprenant un volant de direction (3) tournant autour d'un axe défini par une colonne de direction (4), lesdits moyens de direction (2) étant mobiles le long dudit axe afin d'activer des moyens de freinage dans une direction et des moyens d'accélération dans l'autre direction, ***caractérisé en ce que*** ladite colonne de direction (4) est mécaniquement reliée auxdits moyens de freinage et d'accélération, afin d'être capable d'actionner mécaniquement lesdits moyens de freinage et lesdits moyens d'accélération.

2. Dispositif selon la revendication 1, dans lequel ladite colonne de direction (4), lorsqu'on active lesdits moyens de freinage, désactive en même temps lesdits moyens d'accélération, et vice versa.

3. Dispositif selon la revendication 1 ou 2, dans lequel ladite colonne de direction (4) est mobile axialement sur des moyens de guidage axial (6).

4. Dispositif selon l'une quelconque des revendications 1 à 3, dans lequel lesdits moyens de freinage (8), ou lesdits moyens d'accélération (10), sont activés, ou désactivés, par ladite colonne de direction (4) par l'intermédiaire de moyens de tige (7).

5. Dispositif selon la revendication 4, dans lequel lesdits moyens de tige sont coaxiaux et couplés à ladite colonne de direction (4), lesdits moyens de tige agissant directement sur lesdits moyens de freinage à une extrémité de ceux-ci distante desdits moyens de direction (2) et interagissant indirectement avec lesdits moyens d'accélération (10) par l'intermédiaire d'un bras oscillant (9) ayant une première branche engagée par lesdits moyens de tige (7) et une seconde branche couplée auxdits moyens d'accélération (10).

6. Dispositif selon l'une quelconque des revendications 3 à 5, dans lequel la course axiale de ladite colonne de direction (4) est contrôlée par un actionneur (12), de manière préférée un actionneur hydraulique.

7. Dispositif selon la revendication 6, dans lequel ledit actionneur (12) comprend une première chambre (13) et une seconde chambre (14) définies par un piston (15) couplé auxdits moyens de tige (7), ladite première chambre (13) et ladite seconde chambre (14) étant alimentées par des canalisations (A, B).

8. Dispositif selon la revendication 7, dans lequel lesdites canalisations (A, B) sont munies de moyens de soupape (16) à passages variables de manière à changer la vitesse des écoulements d'entrée et de sortie d'huile dans ladite première chambre (13) et ladite seconde chambre (14), respectivement, pendant les déplacements du piston (15).

9. Dispositif selon la revendication 8, dans lequel lesdits passages desdits moyens de soupape (16) peuvent être modifiés par des moyens de télécommande (17, 18).

10. Dispositif selon l'une quelconque des revendications 7 à 9, et comprenant de plus une canalisation supplémentaire (C) apte à conserver sous pression ladite première chambre (13) si elle est actionnée par des moyens de télécommande supplémentaires (19).

11. Dispositif de commande de la marche d'un véhicule selon la revendication 10, dans lequel ladite canalisation supplémentaire (C) est avantageusement mise sous pression, automatiquement même, au moyen d'un dispositif qui active un coussin gonflable de sécurité.

12. Dispositif selon la revendication 1 ou 2, dans lequel lesdits moyens d'accélération (10), ou lesdits moyens de freinage (8) sont activés par ladite colonne de direction (4) par l'intermédiaire de moyens pousseurs (21, 22, 23) raccordés à ladite colonne de direction (4) et agissant sur un moyen de pédale respectif (25 ; 29) associé opérationnellement auxdits moyens d'accélération (10) ou aux moyens de freinage (8).

13. Dispositif selon la revendication 12, dans lequel lesdits moyens pousseurs (21, 22, 23) comprennent des moyens de barre de connexion (21) fixés au niveau d'une de leurs extrémités à des moyens d'extension (33) en porte à faux depuis des moyens de manchon (20) auxquels ladite colonne de direction (4) est intérieurement couplée, ladite colonne de direction (4) étant couplée auxdits moyens de manchon (20) de manière à être apte à tourner librement, mais incapable de translation par rapport à lui, lesdits moyens de barre de connexion (21) étant aptes à appliquer une poussée audit moyen de pédale respectif (25 ; 29).

14. Dispositif selon la revendication 13, dans lequel lesdits moyens de barre de connexion (21) peuvent coulisser à l'intérieur d'un élément creux (22) muni à une extrémité d'un élément pousseur (23) apte à transmettre ladite poussée audit moyen de pédale respectif (25), lesdits moyens de barre de connexion (21) étant munis de moyens de butée (24) aptes à limiter la pénétration par coulissement de la barre de connexion (21) dans ledit élément creux (22).

15. Dispositif selon l'une quelconque des revendications 12 à 14, dans lequel lesdits moyens de freinage (8) ou lesdits moyens d'accélération (10) sont activés par des moyens de câble (27) ayant une première extrémité reliée à ladite colonne de direction (4) et une seconde extrémité reliée audit moyen de pédale respectif (25, 29).

16. Dispositif selon la revendication 15, dans lequel lesdits moyens de câble (27) sont reliés à des moyens de connexion (30) présents sur une portion inférieure dudit moyen de pédale respectif (27, 29), des moyens de guidage (28) et des moyens de retour (32) pour lesdits moyens de câble (27) étant présents.
